# FASCICULE DE BREVET EUROPEEN

(11) **EP 2 424 902 B1**
(45) Date de publication et mention de la délivrance du brevet: **14.08.2013**
(21) Numéro de dépôt: 10717618.2
(22) Date de dépôt: 27.04.2010
(51) Int. Cl.: C08F 4/54, C08F 36/06, C08F 36/08

(54) **SYSTÈMES CATALYTIQUES À BASE D'UN COMPLEXE DE TERRES RARES POUR LA POLYMÉRISATION STÉRÉOSPÉCIFIQUE DES DIÈNES CONJUGUÉS.**
KATALYTISCHE SYSTEME AUS EINEM KOMPLEX VON SELTENERDMETALLEN ZUR STEREOSPEZIFISCHEN POLYMERISATION VON KONJUGIERTEN DIENEN
CATALYTIC SYSTEMS MADE OF A COMPLEX OF RARE EARTHS FOR STEREOSPECIFIC POLYMERISATION OF CONJUGATED DIENES

(30) Priorité: 28.04.2009 FR 0902073
(43) Date de publication de la demande: 07.03.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH); Centre National de la Recherche Scientifique, 75794 Paris Cedex 16 (FR); Université Claude Bernard Lyon I, 69622 Villeurbanne Cedex (FR)
(72) Inventeur: BOISSON, Christophe, F-01390 Tramoyes (FR); ROLLAND, Olivier, F-75018 Paris (FR); THUILLIEZ, Julien, 63040 Clermont-Ferrand Cedex 9 (FR)
(74) Mandataire: Le Cam, Véronique Marie Christine
(86) Numéro de dépôt international: PCT/EP2010/055636
(87) Numéro de publication internationale: WO 2010/125072

(56) Documents cités:
- US-A- 3 297 667
- DATABASE WPI Week 199228 Thomson Scientific, London, GB; AN 1992-230599 XP002560094 -& JP 4 154819 A (ASAHI CHEM IND CO LTD) 27 mai 1992 (1992-05-27)
- MONTEIL V ET AL: "POLYMERIZATION OF BUTADIENE AND COPOLYMERIZATION OF BUTADIENE WITH STYRENE USING NEODYMIUM AMIDE CATALYSTS" POLYMER INTERNATIONAL, BARKING, GB, vol. 53, 1 janvier 2004 (2004-01-01), pages 576-581, XP008033681 cité dans la demande

## Description

La présente invention concerne un système catalytique multi-composants utilisable pour la polymérisation stéréospécifique 1,4-cis de diènes conjugués. Plus particulièrement, la présente invention concerne un système catalytique comprenant un complexe de terre rare, ainsi qu'un procédé de préparation dudit système catalytique et l'utilisation de ce système catalytique pour la préparation d'élastomères diéniques présentant un taux élevé d'enchaînements cis-1,4.

Boisson et al. Macromol. Chem. Phys. 1999 200 1163-1166 et Monteil et al. Polymer Int. 2004 53 576-581 décrivent l'utilisation de systèmes catalytiques multi-composants pour la polymérisation du butadiène comprenant :
■ un sel de néodyme de type tris(amidure) de formule Nd[N(TMS)₂]₃, soit tris[N,N-bis(triméthylsilyl)amidure] de néodyme,
■ un alkylaluminium de formule Al(i-Bu)₃,
■ un halogénure d'alkylaluminium, de formule AlEt₂Cl.

Ces catalyseurs sont préparés in situ et utilisés pour la polymérisation du butadiène et pour la copolymérisation du butadiène et du styrène. La distribution de masses molaires des polybutadiènes synthétisés est large et plurimodale, ce qui traduit un mauvais contrôle de la polymérisation. En outre, une telle distribution de masses molaires peut être pénalisante en vue de certaines applications de l'élastomère diénique préparé, telle que notamment dans les pneumatiques pour véhicules automobiles.

Dans le même esprit, la demande de brevet WO2003033545 décrit des systèmes catalytiques multi-composants pour la polymérisation de diènes conjugués dont certains à base d'un sel de néodyme de type tris(amidure), par exemple de formule Nd[N(TMS)₂]₃, et d'un co-catalyseur. Dans les exemples de réalisation, l'espèce active formée par réaction du sel de néodyme et du co-catalyseur est de type cationique car le co-catalyseur comprend systématiquement un aluminoxane (méthylaluminoxane modifié - MMAO ou isobutylaluminoxane - IBAO). Optionnellement, un halogénure d'alkylaluminium ou un borane (B(C₆F₅)₃) est ajouté au système catalytique illustré.

Le document US 3,297,667 décrit également des systèmes catalytiques multi-composants à base
(i) d'un composé de terre rare,
(ii) d'un ligand organique bidentate
(iii) d'un halogénure
(iv) d'un alkylaluminium.

Le système catalytique est préparé par réaction de (i) sur (ii) qui conduit à une espèce isolée chélatée du métal de terre rare. Cette espèce est ensuite mise en présence de l'halogénure et l'alkylaluminium. A titre de composé (i), le procédé de préparation des systèmes catalytiques de ce document met essentiellement en oeuvre le chlorure de cérium. Néanmoins, les chlorures de terre rare peuvent présenter une réactivité insatisfaisante avec certains ligands organiques (ii) présents dans les milieux réactionnels, du fait d'une faible solubilité des chlorures dans ces milieux.

Par ailleurs, le document de brevet US 7,300,903 B2 décrit un procédé de polymérisation des oléfines mettant en oeuvre un système catalytique à base :
■ d'un composé isolé à base d'un métal de transition répondant à la formule (I) ci-après pour la définition complète de laquelle il est fait renvoi au texte du brevet, 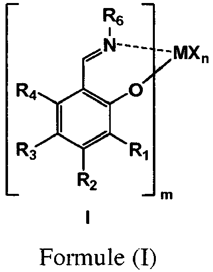 dans laquelle M est un métal appartenant aux groupes 3 à 11 de la classification périodique des éléments,
■ d'au moins un composé sélectionné parmi :
   o un composé organométallique,
   o un composé organoaluminique contenant un atome d'oxygène,
   o un composé pouvant réagir avec le composé à base d'un métal de transition pour former une paire d'ions.

Selon le brevet, dans la formule I, le métal M privilégié et décrit dans les exemples appartient principalement au groupe 4. Il s'agit de titane, de zirconium ou éventuellement d'hafnium. Tous les exemples de ce brevet relatifs aux essais de copolymérisation de l'éthylène et du butadiène ont été effectués à partir de systèmes catalytiques à base de titane ou de zirconium. En fonction des conditions expérimentales et de la nature du système catalytique, ces essais ont notamment permis d'obtenir des copolymères où la proportion de butadiène est très faible et atteint au maximum 6,6 %-mol (exemples 150 à 157). Bien qu'aucun essai d'homopolymérisation du butadiène n'est décrit, la faible capacité des systèmes catalytiques de ce brevet à insérer ce monomère laisse supposer que ces systèmes sont inadaptés à la polymérisation stéréospécifique 1,4-cis du butadiène.

En vue d'une application en pneumatique pour véhicules automobiles et plus particulièrement dans la bande de roulement, il est essentiel de disposer d'élastomères diéniques de microstructure spécifique, notamment de polybutadiène ayant un taux d'enchaînements cis-1,4 élevé. Par ailleurs, une distribution de masses molaires contrôlée, voire étroite, permet d'ajuster au mieux les caractéristiques macrostructurales de l'élastomère en fonction des propriétés recherchées lors de l'utilisation dans la bande de roulement. Aussi, est-on constamment à la recherche de systèmes catalytiques et de procédés de polymérisation qui permettent l'obtention de manière reproductible d'élastomères diéniques ayant des caractéristiques de microstructure et de macrostructure spécifiques, et notamment d'élastomères diéniques ayant un taux d'enchaînements cis-1,4 élevé et ayant une distribution de masses molaires contrôlée.

Les inventeurs ont découvert lors de leurs recherches un nouveau système catalytique multi-composants présentant une activité catalytique satisfaisante en polymérisation stéréospécifique de diènes conjugués, permettant l'obtention d'élastomères diéniques, tels que du polybutadiène ou du polyisoprène, présentant un taux d'enchaînements cis-1,4 élevé, sensiblement supérieur de 90%. Ce nouveau système catalytique est basé sur l'association d'au moins trois constituants, à savoir un complexe de terre rare, un agent d'alkylation et un composé à base d'un noyau aromatique et possédant au moins deux hétéro-atomes. Ce système catalytique présente, en outre, l'avantage de pouvoir contrôler, voire réduire de manière significative, l'indice de polydispersité par rapport à un système ne comprenant que le complexe de terre rare et l'agent d'alkylation. L'indice de polydispersité (Mw/Mn) - Mw étant la masse molaire moyenne en poids et Mn la masse molaire moyenne en nombre - peut être contrôlé, voire réduit, selon la nature des réactifs utilisés et les conditions opératoires mises en jeu.

En conséquence, un premier objet de l'invention est un système catalytique à base d'au moins :
(i) un complexe de terre rare Ln(A)₃(B)ₙ de formule (II), dans laquelle Ln est un métal de terre rare de la famille des lanthanides ou l'yttrium ou le scandium , A est un ligand choisi parmi, la famille des amidures, la famille des alcoolates, la famille des alkyles, des aryles ou des benzyles, la famille des borohydrures, et la famille des organophosphates, B est une base de Lewis et n est un nombre d'une valeur allant de 0 à 3, B et n dépendant de la nature de Ln et de A mis en jeu dans le complexe de terre rare correspondant,
(ii) un agent d'alkylation,
(iii) un composé à base d'un noyau aromatique et possédant au moins deux hétéro-atomes, choisis parmi les éléments O, N, S, P, et répondant à la formule (III) : 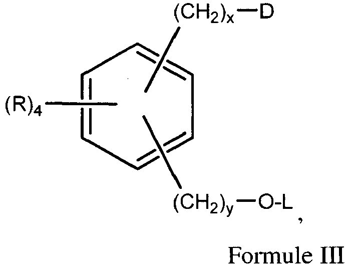 dans laquelle
   - les groupements R sont identiques ou différents entre eux, et représentent chacun soit :
      - un atome d'hydrogène,
      - un radical alkyle aliphatique, cycloaliphatique ou aromatique, comportant éventuellement un ou plusieurs hétéro-atomes (N, O, P, S, Si) ou un ou plusieurs atomes d'halogène,
      - un atome d'halogène,
      - un groupement à base d'un ou plusieurs hétéro-atome (N, O, P, S, Si) ;
         - x et y sont des entiers compris entre 0 et 6 ;
         - D est un groupement possédant une fonction chimique dont un des atomes possède un doublet non-liant ;
         - L est un atome de la colonne 1 de la classification périodique ;
            les substituants du noyau aromatique étant indifféremment en position ortho, méta ou para l'un par rapport à l'autre,
(iv) optionnellement, un donneur d'halogène, et
(v) optionnellement, un diène conjugué de préformation.

Bien entendu, par l'expression "à base de" utilisée pour définir les constituants du système catalytique, on entend le mélange de ces constituants et/ou le produit de la réaction entre ces constituants.

Un autre objet de l'invention est un procédé de préparation du système catalytique multi-composants défini plus haut.

L'invention a également pour objet un procédé de préparation d'un élastomère diénique, tel que le polybutadiène ou le polyisoprène, présentant un taux élevé d'enchaînements cis-1,4 et une distribution de masses molaires contrôlée, voire avec un indice de polydispersité significativement réduit.

Ainsi, un des éléments constitutifs du système catalytique multi-composants selon l'invention est un complexe de terre rare de formule (II) Ln(A)₃(B)ₙ, dans laquelle Ln, A, B et n sont tels que décrits plus haut.

Ln est un métal de terre rare de la famille des lanthanides ou l'yttrium ou le scandium. Plus particulièrement, Ln est choisi parmi les éléments yttrium, néodyme, gadolinium ou samarium. A titre préférentiel, Ln est l'yttrium ou le gadolinium. A titre encore plus préférentiel Ln est l' yttrium.

Dans la définition de B, on entend par base de Lewis notamment des éthers, des amines, des phosphates et des thioethers. Par exemple, à titre d'amine, on peut citer la famille des trialkylamines et des amines aromatiques tels que la pyridine ou encore la pipérazine et ses dérivés. A titre de phosphate, on peut citer par exemple le tri-n-butylphosphate. A titre de thioether, on peut citer la famille des sulfures de dialkyle tels que le sulfure de diméthyle. A titre d'éther, on peut citer par exemple l'éther diéthylique, le 1,2-diéthoxyéthane, le 1,2-di-n-propoxyéthane, le 1,2-di-n-butoxyéthane, le tétrahydrofurane, le dioxane, le tétrahydropyrane. Plus particulièrement B est un éther, préférentiellement du tétrahydrofurane (THF).

A est un ligand pouvant être choisi parmi les divers types de ligands cités plus haut.

Lorsque A est choisi parmi la famille des amidures, celle-ci comprend notamment les dialkylamidures, les N,N-bis(dialkylsilyl)amidures et les N,N-bis(trialkylsilyl)amidures, les groupements alkyles possédant entre 1 et 10 atomes de carbones.

Lorsque A est choisi parmi les dialkylamidures, B est de préférence du THF et n vaut de préférence 1. A est alors de préférence le diisopropylamidure et le diméthylamidure. Lorsque A est choisi parmi les N,N-bis(trialkylsilyl)amidures, n est de préférence égal à 0. A est alors de préférence le N,N-bis(triméthylsilyl)amidure de formule -N[Si(CH₃)₃]₂. Lorsque A est choisi parmi les N,N-bis(dialkylsilyl)amidures, B est de préférence du THF et n est de préférence égal à 2 ou à 3. A est alors de préference de le N,N-bis(diméthylsilyl)amidure de formule -N[SiH(CH₃)₂]₂.

Lorsque A est choisi parmi la famille des borohydrures, A est de préférence le tétrahydroborate, B est de préférence du THF et n est de préférence égal à 2 ou 3.

Lorsque A est choisi parmi la famille des alcoolates, celle-ci comprend les alcoolates d'un alcool ou d'un polyol dérivé d'un hydrocarbure aliphatique ou cyclique et notamment d'un hydrocarbure aliphatique, linéaire ou ramifié, ayant 1 à 10 atomes de carbone dans la chaîne linéaire, plus particulièrement 4 à 8 atomes de carbone. On peut mentionner par exemple le néo-pentanolate.

Lorsque A est choisi parmi la famille des alkyles, celle-ci comprend la famille des (trialkylsilyl)alkyles. Parmi cette famille A est de préférence le (triméthylsilyl)méthyle de formule -CH₂-Si(CH₃)₃ ou le bis(triméthylsilyl)méthyle de formule -CH-[Si(CH₃)₃]₂ ; Lorsque A est choisi parmi la famille des aryles ou des benzyles, le noyau aromatique est préférentiellement substitué uniquement par 5 atomes d'hydrogène ou par 4 atomes d'hydrogène et un substituant portant une fonction amine tertiaire ou une fonction éther. A titre plus préférentiel, le groupement A est le diméthylaminobenzyle de formule -CH₂-C₆H₄[N(CH₃)₂].

Lorsque A est choisi parmi la famille des organophosphates, celle-ci comprend les organophosphates de diesters d'acide phosphorique de formule générale (R'O)(R"O)PO(OH), dans laquelle R' et R", identiques ou différents, représentent un radical alkyle, aryle ou alkylaryle. Parmi ces diesters d'acide phosphorique, R' et R", identiques ou différents, sont de préférence un radical n-butyle, isobutyle, pentyle, amyle, isopentyle, 2,2-diméthylhexyle, 1-éthylhexyle, 2-éthylhexyle, tolyle, Parmi la famille des organophosphates, A est plus préférentiellement encore le bis(2-éthylhexyl)phosphate. Selon un aspect préférentiel de l'invention, dans la formule (II) du complexe de terre rare, le ligand A est choisi parmi la famille des amidures.

On notera que selon cet aspect de l'invention, selon lequel le ligand A est un amidure, Ln représente préférentiellement l'yttrium ou le gadolinium dans la formule (II). Plus préférentiellement encore selon cet aspect préférentiel de l'invention, le complexe de terre rare de formule (II) est le tris[N,N-bis(triméthylsilyl)amidure] d'yttrium ou le tris[N,N-bis(triméthylsilyl)amidure] de gadolinium, et tout particulièrement le tris[N,N-bis(triméthylsilyl)amidure] d'yttrium.

Selon un aspect de l'invention, le complexe de terre rare peut être un complexe d'un mélange de terres rares ou encore un mélange de plusieurs complexes d'une ou de plusieurs terres rares.

Un autre élément constitutif du système catalytique multi-composants selon l'invention est un agent d'alkylation. A titre d'agents d'alkylation utilisables, on peut citer les composés alkylaluminium, parmi lesquels on préfère utiliser un composé choisi parmi:
- les trialkylaluminiums, le radical alkyle étant en C₁-C₁₀, par exemple le triisobutylaluminium ou le trioctylaluminium ;
- les hydrures de dialkylaluminium, le radical alkyle étant en C₁-C₁₀, par exemple l'hydrure de diisobutylaluminium.

On notera que cet agent d'alkylation est de préférence constitué du triisobutylaluminium ou de l'hydrure de diisobutylaluminium, plus particulièrement du triisobutylaluminium.

Un autre élément constitutif du système catalytique multi-composants selon l'invention est un composé à base d'un noyau aromatique et possédant au moins deux hétéro-atomes, choisis parmi les éléments O, N, S, P, et répondant à la formule (III) : 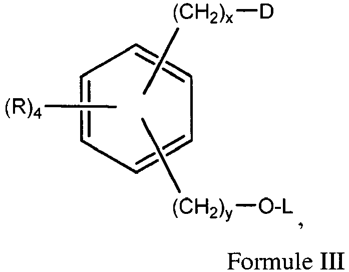 dans laquelle
- R sont identiques ou différents entre eux, et peuvent être chacun soit :
- un atome d'hydrogène,
- un radical alkyle aliphatique en C₁-C₂₀, cycloaliphatique en C₅-C₂₀ ou aromatique en C₆-C₂₀, comportant éventuellement un ou plusieurs hétéro-atomes (N, O, P, S, Si), de préférence l'azote ou l'oxygène ou un ou plusieurs atomes d'halogène, de préférence le chlore,
- un atome d'halogène, de préférence choisi parmi le chlore ou le brome,
- un groupement à base d'un ou plusieurs hétéro-atomes (N, O, P, S, Si), préférentiellement choisi parmi les fonctions alcoxy, amine secondaire ou amine tertiaire.
   - x et y, identiques ou différents, sont des nombres entiers compris entre 0 et 6, de préférence x est compris 0 et 3 et y compris entre 0 et 3, plus préférentiellement encore x = y=0;
   - D est un groupement possédant une fonction chimique dont un des atomes possède un doublet non-liant, tel que les fonctions alcool, amine, éther, imine, phosphine, thioéther, thiol;
   - L est un atome de la colonne 1 de la classification périodique, tel que l'hydrogène, le lithium, le sodium ou le potassium, de préférence l'hydrogène ;

Les substituants (CH₂)ₓ-D et (CH₂)_{y}-O-L du noyau aromatique sont de préférence en position ortho ou méta l'un par rapport à l'autre, plus préférentiellement encore en position ortho.

Selon un aspect préférentiel de l'invention, dans la formule (III) D représente un groupement imine. Le composé de formule (III) est alors plus préférentiellement choisi parmi ceux représentés par la formule (IV): 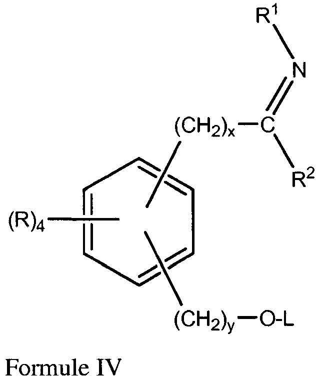 dans laquelle R, L, x et y sont tels que définis plus haut et R¹ et R², identiques ou différents, sont chacun un atome d'hydrogène ou un radical alkyle aliphatique en C₁-C₂₀. cycloaliphatique en C₅-C₂₀ ou aromatique en C₆-C₂₀,

Plus préférentiellement encore, parmi ces composés x=y=0 et L est un atome d'hydrogène et le composé de formule (III) est choisi parmi la famille des phénoxyimines.

Dans la famille des phénoxyimines, on préfèrera celles dont le substituant hydroxyle et le substituant imine sont en position ortho l'un de l'autre. Ces composés préférentiels peuvent être représentés par la formule (V):

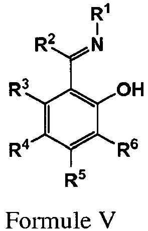

R¹ et R² sont tels que définis plus haut et R³ à R⁶ ont la même définition que R plus haut.

Parmi ces composés de formule V, on citera plus particulièrement ceux pour lesquels R¹ représente un radical aromatique en C₆-C₂₀, substitué ou non. Des exemples de ces composés sont le N-phényl-3,5-di-tert-butylsalicylaldimine représenté par la formule (VI). 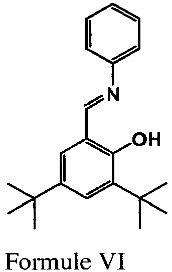 et le N-(2,6-diisopropyl)phényl-3,5-di-tert-butylsalicylaldimine de formule (VII):

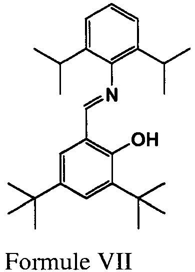

Selon un autre mode de réalisation de l'invention, le système catalytique multi-composants peut comprendre un élément optionnel qui est un agent donneur d'halogène. Parmi ces agents, on peut citer les halogénures d'alkylaluminium tels que par exemple le chlorure de diéthyaluminium, le bromure de diéthylaluminium, le dichlorure d'éthylaluminium ou le sesquichlorure d'éthylaluminium. On préfère plus particulièrement le chlorure de diéthylaluminium.

Selon un autre mode de réalisation de l'invention, le système catalytique selon l'invention peut également comprendre un diène conjugué de préformation. A titre de diène conjugué de préformation utilisable pour préformer le système catalytique selon l'invention, on peut citer le 1,3-butadiène, le 2-méthyl-1,3-butadiène (ou isoprène), les 2,3-di(alcoyle en C₁ à C₅)-1,3-butadiène tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, le phényl-1,3-butadiène, le 1,3-pentadiène, le 2,4-hexadiène, ou tout autre diène conjugué ayant entre 4 et 8 atomes de carbone, le 1,3-butadiène étant utilisé à titre préférentiel.

Un autre mode de réalisation de l'invention consiste en la combinaison de ces deux modes de réalisation.

A titre préférentiel, dans le système catalytique selon l'invention, le rapport molaire (composé à base d'un noyau aromatique / métal de terre rare) peut présenter une valeur comprise entre 0 et 3 (bornes exclues), plus préférentiellement allant de 0,5 à 2 (bornes incluses).

A titre préférentiel encore, dans le système catalytique selon l'invention, le rapport molaire (agent d'alkylation / métal de terre rare) peut présenter une valeur allant de 2 à 40 (bornes incluses), plus préférentiellement de 2 à 10.

Egalement à titre préférentiel lorsque le système catalytique selon l'invention comprend un donneur d'halogène le rapport molaire (donneur d'halogène / métal de terre rare) peut présenter une valeur allant de 1 à 3, plus préférentiellement de 2,5 à 3.

Egalement à titre préférentiel, lorsque le système catalytique selon l'invention comprend un diène conjugué de préformation le rapport molaire (diène conjugué de préformation / métal de terre rare) peut présenter une valeur allant de 10 à 70, plus préférentiellement de 20 à 60.

Un autre objet de l'invention est la préparation du système catalytique décrit ci-dessus.

Selon un premier mode de préparation du système catalytique selon l'invention, les constituants du système catalytique sont ajoutés directement au solvant de polymérisation contenant le ou les monomère(s) à polymériser, de manière à obtenir un catalyseur formé *in situ.*

Selon un second mode de préparation du système catalytique selon l'invention, les constituants du système catalytique sont pré-mélangés avant d'être mis en contact avec le solvant contenant le ou les monomère(s) à polymériser, en introduisant dans un solvant hydrocarboné inerte les constituants du système catalytique, pendant un temps compris entre 0 et 120 minutes, à une température allant de 10°C à 80°C, éventuellement supérieure à la température ambiante, généralement allant de 18°C à 60°C, de manière à obtenir un catalyseur pré-mélangé. Le catalyseur pré-mélangé ainsi obtenu est ensuite mis en contact avec le solvant contenant le ou les monomère(s) à polymériser.

Selon un troisième mode de préparation du système catalytique selon l'invention, une fois les constituants du système catalytique mis en contact les uns avec les autres dans un solvant hydrocarboné inerte, une faible quantité de diène conjugué de préformation est ajoutée de manière à obtenir un catalyseur préformé. La réaction de préformation est effectuée pendant un temps compris entre 0 et 120 minutes à une température allant de 10°C à 80°C, éventuellement supérieure à la température ambiante, généralement allant de 18°C à 30°C, Le catalyseur préformé ainsi obtenu est ensuite mis en contact avec le solvant contenant le ou les monomère(s) à polymériser.

A cet effet, il convient de noter que les constituants du système catalytique sont de préférence mélangés avant d'être mis en contact avec le solvant contenant le ou les monomère(s) à polymériser, c'est-à-dire avant la réaction de polymérisation. Les constituants, selon l'ordre d'ajout et leur nature, peuvent réagir entre eux ou non.

La préparation du système catalytique selon l'invention est réalisée dans un solvant aliphatique ou alicyclique de bas poids moléculaire, tel que par exemple le cyclohexane, le méthylcyclohexane, le n-heptane, ou un mélange de ces solvants, de préférence dans le n-heptane, ou encore dans un solvant aromatique tel que le toluène. Il convient de noter que les solvants non-aromatiques sont particulièrement préférés.

Selon un premier ordre d'ajout des constituants du système catalytique selon l'invention, ceux-ci sont ajoutés comme suit : dans une première étape, on ajoute dans le solvant l'agent d'alkylation ; dans une seconde étape, on ajoute ensuite le complexe de terre rare de formule (II); puis, dans une troisième étape, on ajoute le cas échéant l'agent donneur d'halogène; et, dans une quatrième étape, on ajoute le composé de formule (III) et le cas échéant le diène conjugué de préformation.

Selon un second ordre d'ajout des constituants du système catalytique selon l'invention, ceux-ci sont ajoutés comme suit : dans une première étape, on ajoute dans le solvant le complexe de terre rare de formule (II) ; dans une seconde étape on ajoute le composé de formule (III) ; puis, dans une troisième étape, on ajoute l'agent d'alkylation et le cas échéant, dans des étapes ultérieures, le diène conjugué de préformation et finalement l'agent donneur d'halogène.

Un autre objet de l'invention est un procédé de préparation d'élastomères diéniques présentant un taux élevé d'enchaînements cis-1,4 et une distribution de masses molaires controlée, voire avec un indice de polydispersité (Mw/Mn) significativement réduit.

Ce procédé selon l'invention consiste à faire réagir le système catalytique décrit plus haut avec le ou les monomère(s) à polymériser, pour l'obtention d'un élastomère diénique pouvant être tout homopolymère ou copolymère obtenu par homopolymérisation ou copolymérisation d'au moins un monomère diène conjugué ayant de 4 à 12 atomes de carbone, éventuellement avec un composé vinylaromatique.

A titre de monomère diène conjugué conviennent notamment le 1,3-butadiène, l'isoprène, les 2,3-di(alkyle en C₁ à C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatiques conviennent par exemple le styrène, l'ortho-, le méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

La polymérisation est de préférence effectuée en présence d'un solvant hydrocarboné inerte qui peut être par exemple un hydrocarbure aliphatique ou alicyclique comme le pentane, l'hexane, l'heptane, l'iso-octane, l'isobutane, le cyclohexane, le méthylcyclohexane ou un hydrocarbure aromatique comme le benzène, le toluène, le xylène.

La polymérisation peut être effectuée en continu ou en discontinu. On effectue généralement la polymérisation à une température comprise entre 20°C et 150°C et de préférence voisine de 30°C à 110°C.

Avantageusement et en comparaison à un procédé mettant en oeuvre un système catalytique ne comprenant pas de composé aromatique à au moins deux hétéro-atomes de formule (III), le procédé selon l'invention permet d'obtenir avec une activité catalytique améliorée, un élastomère diénique caractérisé par un taux élevé d'enchaînements cis-1,4 et par une distribution de masses molaires contrôlée, voire avec un indice de polydispersité significativement réduit, comme le montrent les exemples qui suivent. Cet élastomère peut être par exemple constitué d'un polyisoprène (IR) ou d'un polybutadiène (BR).

Les caractéristiques précitées de la présente invention, ainsi que d'autres, seront mieux comprises à la lecture de la description suivante de plusieurs exemples de réalisation de l'invention, donnés à titre illustratif.

### Exemples de synthèses organiques et organométalliques

L'ensemble des synthèses organométalliques a été réalisé sous atmosphère inerte d'argon, en utilisant soit les techniques de Schlenk soit une boîte à gants. Tous les solvants utilisés lors de ces synthèses sont secs et conservés sous atmosphère inerte. Le pentane et le THF sont fraîchement distillés sur sodium/benzophénone. L'ensemble des réactifs proviennent de Sigma-Aldrich, Strem et Fluka.

### Synthèse des complexes tris[N,N-bis(triméthylsilyl)amidure] de terre rare

Les complexes tris[N,N-bis(triméthylsilyl)amidure] de terre rare ont été synthétisés selon la méthode décrite par Bradley et al. (Bradley, D. C., Ghotra, J. S., and Hart, F. A., J. Chem. Soc., Dalton Trans. 1973, 1021). et modifiée par Boisson et al. (Boisson, C., Barbotin, F., and Spitz, R., Macromol. Chem. Phys. 1999, 200, 1163).

### Synthèse du N-(2,6-diisopropyl)phényl-3,5-di-tert-butylsalicylaldimine

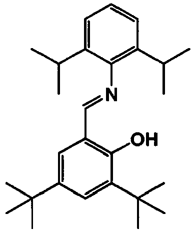

Le N-(2,6-diisopropyl)phényl-3,5-di-tert-butylsalicylaldimine a été synthétisé selon la procédure décrite par Cameron et al. (Cameron, P. A., Gibson, V. C., Redshaw, C., Segal, J. A., Solan, G. A., White, A. J. P., and Williams, D. J. J., Chemical Society, Dalton Transactions 2001, 1472).

### Exemples de polymérisation

L'ensemble des préparations des systèmes catalytiques a été réalisé sous atmosphère inerte d'argon, en utilisant soit les techniques de Schlenk soit une boîte à gants. Tous les solvants utilisés lors de ces préparations sont secs et sous atmosphère inerte. Le toluène et l'heptane sont séchés à deux reprises sur tamis moléculaire. L'ensemble des réactifs proviennent de Sigma-Aldrich, Strem et Fluka. Les solutions de triisobutylaluminium, de chlorure de diéthylaluminium et de N-(2,6-diisopropyl)phényl-3,5-di-tert-butylsalicylaldimine ont été préparées dans l'heptane, à partir des réactifs purs, à des concentrations de 0,740, 0,027 et 0,100 mol.L⁻¹ respectivement.

Les masses molaires des polymères solubles dans le THF sont déterminées par chromatographie d'exclusion stérique dans le THF. Les échantillons sont injectés à l'aide d'un injecteur Waters 717 dans une série de colonnes placées dans une enceinte thermostatée à 45°C. La détection s'effectue à l'aide d'un réfractomètre Waters 410 et les masses molaires des polybutadiènes sont exprimées en équivalents polystyrène (en utilisant des étalons polystyrène certifiés Polymer Laboratories). La microstructure est déterminée par FT-IR sur un spectromètre Nicolet 460 FT-IR (mesures à température ambiante sur 32 scans de 500 à 3800 cm⁻¹) selon la méthode décrite par Morero et al. (Morero, D., Santambrogio, A., Porri, L., and Ciampelli, F., Chim. Ind. (Milano) 1959, 41).

Les polymérisations se déroulent dans un réacteur à cuve jetable en verre de 250 mL (flacon Schott), muni d'une pale d'agitation en acier inoxydable. Le contrôle de la température est assuré grâce à un bain d'eau thermostaté, connecté à une double-enveloppe en polycarbonate. Ce réacteur possède toutes les entrées ou sorties nécessaires aux manipulations traditionnelles : (i) conditionnement du réacteur à 80°C par des cycles vide - argon, (ii) introduction de solutions à la canule sous balayage d'argon et (iii) alimentation en monomères gazeux.

### Exemple comparatif 1

Une solution composée (par ordre d'addition) de 150 mL d'heptane, de triisobutylaluminium (1,9 mL - 1,4 mmol), de tris[N,N-bis(triméthylsilyl)amidure] de gadolinium (19,2 mg - 0,03 mmol) et de chlorure de diéthylaluminium (2,2 mL - 0,06 mmol) est préparée à 23°C et agitée pendant 5 minutes. Cette solution est ensuite injectée sous argon dans un réacteur en verre de 250 mL. Puis le réacteur est dégazé et le butadiène (10 mL - 115 mmol) est introduit. Le réacteur est chauffé à 70°C puis la solution est agitée pendant 30 min. La réaction est stoppée par dégazage du réacteur puis refroidissement. Le polymère est obtenu par précipitation dans une solution d'éthanol (200 mL) et de 2,6-ditertiobutyl-4-méthylphénol (5 mg). Le polymère (2,5 g) est isolé après séchage.

### Exemple 2

Une solution composée (par ordre d'addition) de 150 mL d'heptane, de triisobutylaluminium (1,9 mL - 1,4 mmol), de tris[N,N-bis(triméthylsilyl)amidure] de gadolinium (19,2 mg - 0,03 mmol), de chlorure de diéthylaluminium (2,2 mL - 0,06 mmol) et de N-(2,6-diisopropyl)phényl-3,5-di-tert-butylsalicylaldimine (0,3 mL - 0,03 mmol) est préparée à 23°C et agitée pendant 5 minutes. Cette solution est ensuite injectée sous argon dans un réacteur en verre de 250 mL. Puis le réacteur est dégazé et le butadiène (10 mL - 115 mmol) est introduit. Le réacteur est chauffé à 70°C puis la solution est agitée pendant 30 min. La réaction est stoppée par dégazage du réacteur puis refroidissement. Le polymère est obtenu par précipitation dans une solution d'éthanol (200 mL) et de 2,6-ditertiobutyl-4-méthylphénol (5 mg). Le polymère (3,5 g) est isolé après séchage.

### Exemple comparatif 3

Une solution composée (par ordre d'addition) de 150 mL d'heptane, de triisobutylaluminium (3,2 mL - 2,40 mmol), de tris[N,N-bis(triméthylsilyl)amidure] d'yttrium (34,2 mg - 0,06 mmol) et de chlorure de diéthylaluminium (4,4 mL - 0,12 mmol) est préparée à 23°C et agitée pendant 5 minutes. Cette solution est ensuite injectée sous argon dans un réacteur en verre de 250 mL. Puis le réacteur est dégazé et le butadiène (10 mL - 115 mmol) est introduit. Le réacteur est chauffé à 70°C puis la solution est agitée pendant 240 min. La réaction est stoppée par dégazage du réacteur puis refroidissement. Le polymère est obtenu par précipitation dans une solution d'éthanol (200 mL) et de 2,6-ditertiobutyl-4-méthylphénol (5 mg). Le polymère (2,5 g) est isolé après séchage.

### Exemple 4

Une solution composée (par ordre d'addition) de 150 mL d'heptane, de triisobutylaluminium (3,2 mL - 2,40 mmol), de tris[N,N-bis(triméthylsilyl)amidure] d'yttrium (34,2 mg - 0,06 mmol), de chlorure de diéthylaluminium (4,4 mL - 0,12 mmol) et de N-(2,6-diisopropyl)phényl-3,5-di-tert-butylsalicylaldimine (0,6 mL - 0,06 mmol) est préparée à 23°C et agitée pendant 5 minutes. Cette solution est ensuite injectée sous argon dans un réacteur en verre de 250 mL. Puis le réacteur est dégazé et le butadiène (10 mL - 115 mmol) est introduit. Le réacteur est chauffé à 70°C puis la solution est agitée pendant 60 min. La réaction est stoppée par dégazage du réacteur puis refroidissement. Le polymère est obtenu par précipitation dans une solution d'éthanol (200 mL) et de 2,6-ditertiobutyl-4-méthylphénol (5 mg). Le polymère (3,3 g) est isolé après séchage.

**Tableau récapitulatif des résultats**

| Exemple | Ln (concentration en mmol.L⁻¹) | Conversion en % (temps en minute) | Activité en g.mol⁻¹.h⁻¹ | Mn en g.mol⁻¹ | IP |
|---|---|---|---|---|---|
| 1 | Gd (0,2) | 37 (30) | 43 | 192000 | 4,0 |
| 2 | Gd (0,2) | 56 (30) | 65 | 185000* | 2,8* |
| 3 | Y (0,4) | 39 (240) | 3 | 80000 | 12,1 |
| 4 | Y (0,4) | 53 (60) | 15 | 117000 | 4,9 |

| | | | | | |
|---|---|---|---|---|---|
| * La distribution de masses molaires est bimodale ; les données reportées sont celles du massif majoritaire (64 % de l'aire) ; le second massif (36 % de l'aire) à une Mn de 11000 g.mol⁻¹ et une IP de 1,74. | | | | | |

**Tableau récapitulatif de la microstructure**

| Exemple | Microstructure (%) | | |
|---|---|---|---|
| | 1,4-cis | 1,4-trans | 1,2 |
| 1 | 98,8 | 1,2 | 0 |
| 2 | 98,7 | 1,3 | 0 |
| 3 | 95,1 | 4,1 | 0,8 |
| 4 | 91,3 | 6,4 | 2,3 |

L'ajout d'un additif N-(2,6-diisopropyl)phényl-3,5-di-tert-butylsalicylaldimine lors de la préparation d'un système catalytique à base de tris[N,N-bis(triméthylsilyl)amidure] de gadolinium ou d'yttrium permet d'accroître l'activité catalytique. La stéréospécificité du catalyseur n'est pas pénalisée puisque les taux de 1,4-cis restent élevés (>90% pour l'yttrium et >98% pour le gadolinium).

## Revendications

1. Système catalytique de polymérisation **caractérisé en ce qu'**il comprend:
(i) un complexe de terre rare de formule (II) Ln(A)₃(B)ₙ, dans laquelle
- Ln est un métal terre rare de la famille des lanthanides ou l'yttrium ou le scandium,
- A est un ligand choisi parmi la famille des organophosphates, la famille des alcoolates, la famille des amidures, la famille des alkyles, des aryles ou des benzyles et la famille des borohydrures,
- B est une base de Lewis et
- n est un nombre allant de 0 à 3;
(ii) un agent d'alkylation;
(iii) un composé à base d'un noyau aromatique et possédant au moins deux hétéro-atomes choisis parmi les éléments O, N, S, P, et répondant à la formule (III) : 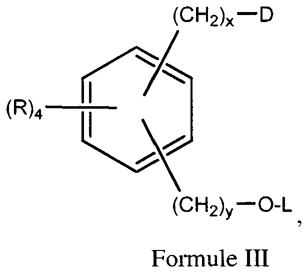 dans laquelle
- les groupements R sont identiques ou différents entre eux, et représentent chacun soit :
- un atome d'hydrogène,
- un radical alkyle aliphatique, cycloaliphatique ou aromatique, comportant éventuellement un ou plusieurs hétéro-atomes (N, O, P, S, Si) ou un ou plusieurs atomes d'halogène,
- un atome d'halogène,
- un groupement à base d'un ou plusieurs hétéro-atomes (N, O, P, S, Si);
- x et y sont des entiers de 0 à 6 ;
- D est un groupement possédant une fonction chimique dont un des atomes possède un doublet non-liant;
- L étant un atome de la colonne 1 de la classification périodique.

2. Système catalytique de polymérisation selon la revendication 1, **caractérisé en ce que** dans la formule (II), Ln représente l'yttrium ou le gadolinium.

3. Système catalytique de polymérisation selon la revendication 1 ou 2, **caractérisé en ce que** dans la formule (II), A est un ligand choisi parmi la famille des amidures.

4. Système catalytique de polymérisation selon l'une quelconque des revendications 1 à 3, **caractérisé en ce que** dans la formule (III), D est un groupement possédant une fonction choisie parmi les fonctions alcool, amine, éther, imine, phosphine, thioéther et thiol.

5. Système catalytique de polymérisation selon la revendication 4, **caractérisé en ce que** le composé de formule (III) est choisi parmi ceux représentés par la formule (IV): 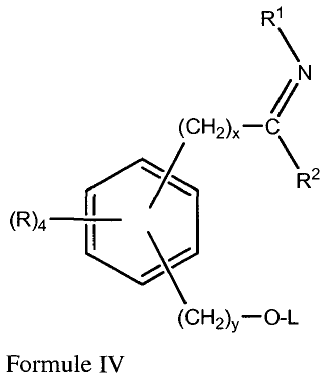 dans laquelle R, L, x et y sont tels que définis dans la revendication 1 et R¹ et R², identiques ou différents, sont chacun un atome d'hydrogène ou un radical alkyle aliphatique en C₁-C₂₀, cycloaliphatique en C₅-C₂₀ ou aromatique en C₆-C₂₀.

6. Système catalytique de polymérisation selon la revendication 5, **caractérisé en ce que** le composé de formule (IV) est choisi parmi les phénoxyimines de formule (V): 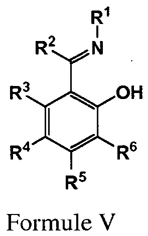 dans laquelle R¹ et R² sont tels que définis dans la revendication5 et R³ à R⁶ ont la même définition que R défini dans la revendication 1.

7. Système catalytique de polymérisation selon la revendication 6, **caractérisé en ce que** le phénoxyimine de formule (V) est choisi parmi la N-phényl-3,5-di-tert-butylsalicylaldimine et N-(2,6-diisopropyl)phényl-3,5-di-tert-butylsalicylaldimine.

8. Système catalytique de polymérisation selon l'une quelconque des revendications 1 à 7, **caractérisé en ce qu'**il comprend un composé donneur d'halogène.

9. Système catalytique de polymérisation selon l'une quelconque des revendications 1 à 8, **caractérisé en ce qu'**il comprend un diène conjugué de préformation.

10. Système catalytique de polymérisation selon l'une quelconque des revendications 1 à 9, **caractérisé en ce que** le rapport molaire (composé à base d'un noyau aromatique de formule III/ métal de terre rare) a une valeur comprise entre 0 et 3 (bornes exclues).

11. Système catalytique de polymérisation selon l'une des revendications 1 à 10, **caractérisé en ce que** le rapport molaire (agent d'alkylation / métal de terre rare) a une valeur allant de 2 à 40.

12. Procédé de préparation d'un système catalytique selon les revendications 1 à 11, **caractérisé en ce que** ledit système catalytique est obtenu par réaction *in situ* dans un solvant hydrocarboné inerte du complexe de terre rare du composé à base d'un noyau aromatique de formule (III) et de l'agent d'alkylation, ainsi que le cas échéant du donneur d'halogène.

13. Procédé de préparation d'un système catalytique selon les revendications 1 à 11, **caractérisé en ce que** ledit système catalytique est obtenu en prémélangeant directement dans un solvant hydrocarboné inerte, le complexe de terre rare, le composé à base d'un noyau aromatique de formule (III) et l'agent d'alkylation, ainsi que le cas échéant le donneur d'halogène.

14. Procédé de préparation d'un système catalytique selon les revendications 9 à 11, **caractérisé en ce que** ledit système catalytique est obtenu par préformation dans un solvant hydrocarboné inerte du complexe de terre rare du composé à base d'un noyau aromatique de formule (III) et de l'agent d'alkylation, ainsi que le cas échéant du donneur d'halogène en présence du diène conjugué de préformation.

15. Procédé de préparation d'un élastomère diénique présentant un taux élevé d'enchaînements cis-1,4, comprenant une réaction en continu ou en discontinu d'un système catalytique dans un solvant hydrocarboné inerte avec au moins un monomère diène conjugué à polymériser, **caractérisé en ce que** ledit système catalytique est tel que défini dans l'une quelconque des revendications 1 à 11.

## Patentansprüche

1. Katalytisches Polymerisationssystem, **dadurch gekennzeichnet, dass** es Folgendes umfasst:
(i) einen Seltenerdmetallkomplex der Formel (II) Ln(A)₃(B)ₙ, worin
- Ln für ein Seltenerdmetall aus der Familie der Lanthanide oder Yttrium oder Scandium steht,
- A für einen Liganden aus der Familie der Organophosphate, der Familie der Alkoholate, der Familie der Amide, der Familie der Alkyle, Aryle oder Benzyle und der Familie der Borhydride steht,
- B für eine Lewis-Base steht und
- n für eine Zahl im Bereich von 0 bis 3 steht;
(ii) ein Alkylierungsmittel;
(iii) eine Verbindung, die auf einem aromatischen Kern basiert und mindestens zwei Heteroatome, die unter den Elementen O, N, S und P ausgewählt sind, aufweist und der Formel (III) entspricht: 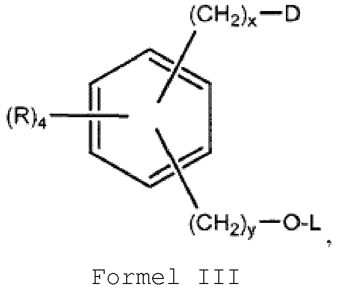 worin
- die Gruppen R gleich oder voneinander verschieden sind und jeweils für:
- ein Wasserstoffatom,
- einen aliphatischen, cycloaliphatischen oder aromatischen Alkylrest, der gegebenenfalls ein oder mehrere Heteroatome (N, O, P, S, Si) oder ein oder mehrere Halogenatome umfasst,
- ein Halogenatom,
- eine Gruppe auf der Basis eines oder mehrerer Heteroatome (N, O, P, S, Si)
stehen;
- x und y für ganze Zahlen von 0 bis 6 stehen;
- D für eine Gruppierung mit einer chemischen Funktion, bei der eines der Atome ein nichtbindendes Elektronenpaar aufweist;
- wobei L für ein Atom aus Spalte 1 des Periodensystems steht.

2. Katalytisches Polymerisationssystem nach Anspruch 1, **dadurch gekennzeichnet, dass** in der Formel (II) Ln für Yttrium oder Gadolinium steht.

3. Katalytisches Polymerisationssystem nach Anspruch 1 oder 2, **dadurch gekennzeichnet, dass** in der Formel (II) A für einen Liganden aus der Familie der Amide steht.

4. Katalytisches Polymerisationssystem nach einem der Ansprüche 1 bis 3, **dadurch gekennzeichnet, dass** in der Formel (III) D für eine Gruppe mit einer Funktion, die aus Alkohol-, Amin-, Ether-, Imin-, Phosphin-, Thioether- und Thiolfunktionen ausgewählt ist, steht.

5. Katalytisches Polymerisationssystem nach Anspruch 4, **dadurch gekennzeichnet, dass** die Verbindung der Formel (III) unter denjenigen ausgewählt ist, die durch die Formel (IV) wiedergegeben werden: 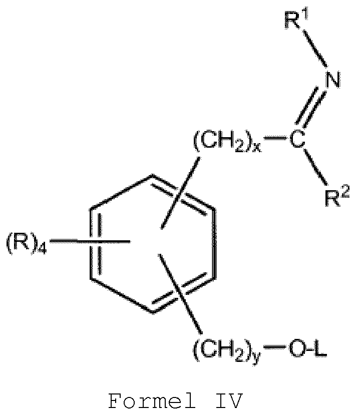 worin R, L, x und y die in Anspruch 1 angegebenen Bedeutungen besitzen und R¹ und R² gleich oder verschieden sind und jeweils für ein Wasserstoffatom oder einen aliphatischen C₁-C₂₀-Alkylrest, einen cycloaliphatischen C₅-C₂₀-Alkylrest oder einen aromatischen C₆-C₂₀-Alkylrest stehen.

6. Katalytisches Polymerisationssystem nach Anspruch 5, **dadurch gekennzeichnet, dass** die Verbindung der Formel (IV) aus Phenoxyiminen der Formel (V) ausgewählt ist: 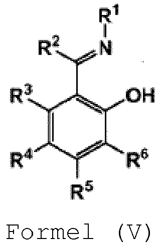 worin R¹ und R² die in Anspruch 5 angegebenen Bedeutungen besitzen und R³ bis R⁶ die gleiche Bedeutung wie R in Anspruch 1 besitzen.

7. Katalytisches Polymerisationssystem nach Anspruch 6, **dadurch gekennzeichnet, dass** das Phenoxyimin der Formel (V) aus N-Phenyl-3,5-di-tert.-butyl-salicylaldimin und N-(2,6-Diisopropyl)phenyl-3,5-di-tert.-butylsalicylaldimin ausgewählt ist.

8. Katalytisches Polymerisationssystem nach einem der Ansprüche 1 bis 7, **dadurch gekennzeichnet, dass** es eine Halogendonorverbindung umfasst.

9. Katalytisches Polymerisationssystem nach einem der Ansprüche 1 bis 8, **dadurch gekennzeichnet, dass** es ein konjugiertes Dien zur Vorbildung umfasst.

10. Katalytisches Polymerisationssystem nach einem der Ansprüche 1 bis 9, **dadurch gekennzeichnet, dass** das Molverhältnis von Verbindung auf der Basis eines aromatischen Kerns der Formel III zu Seltenerdmetall einen Wert zwischen 0 und 3 (Grenzwerte ausgeschlossen) aufweist.

11. Katalytisches Polymerisationssystem nach einem der Ansprüche 1 bis 10, **dadurch gekennzeichnet, dass** das Molverhältnis von Alkylierungsmittel zu Seltenerdmetall einen Wert im Bereich von 2 bis 40 aufweist.

12. Verfahren zur Herstellung eines katalytischen Systems nach den Ansprüchen 1 bis 11, **dadurch gekennzeichnet, dass** man das katalytische System dadurch erhält, dass man den Seltenerdmetallkomplex der Verbindung auf der Basis eines aromatischen Kerns der Formel (III) und des Alkylierungsmittels sowie gegebenenfalls des Halogendonors in einem inerten Kohlenwasserstoff-Lösungsmittel in situ umsetzt.

13. Verfahren zur Herstellung eines katalytischen Systems nach den Ansprüchen 1 bis 11, **dadurch gekennzeichnet, dass** man das katalytische System dadurch erhält, dass man den Seltenerdmetallkomplex, die Verbindung auf der Basis eines aromatischen Kerns der Formel (III) und das Alkylierungsmittel sowie gegebenenfalls den Halogendonor in einem inerten Kohlenwasserstoff-Lösungsmittel direkt vormischt.

14. Verfahren zur Herstellung eines katalytischen Systems nach den Ansprüchen 9 bis 11, **dadurch gekennzeichnet, dass** man das katalytische System dadurch erhält, dass man den Seltenerdmetallkomplex der Verbindung auf der Basis eines aromatischen Kerns der Formel (III) und des Alkylierungsmittels sowie gegebenenfalls des Halogendonors in Gegenwart des konjugierten Diens zur Vorbildung in einem inerten Kohlenwasserstoff-Lösungsmittel vorbildet.

15. Verfahren zur Herstellung eines Dienelastomers mit hohem Gehalt an cis-1,4-Verknüpfungen, umfassend eine kontinuierliche oder diskontinuierliche Umsetzung eines katalytischen Systems in einem inerten Kohlenwasserstoff-Lösungsmittel mit mindestens einem zu polymerisierenden konjugierten Dienmonomer, **dadurch gekennzeichnet, dass** das katalytische System in einem der Ansprüche 1 bis 11 definiert ist.

## Claims

1. Catalytic polymerization system **characterized in that** it comprises:
(i) a rare-earth complex of Formula (II) Ln(A)₃(B)ₙ, in which
- Ln is a rare-earth metal from the family of lanthanides or yttrium or scandium,
- A is a ligand chosen from the family of organophosphates, the family of alcoholates, the family of amides, the family of alkyls, aryls or benzyls and the family of borohydrides,
- B is a Lewis base, and
- n is a number ranging from 0 to 3;
(ii) an alkylating agent;
(iii) a compound based on an aromatic ring and having at least two heteroatoms chosen from the elements O, N, S, P, and corresponding to the Formula (III): 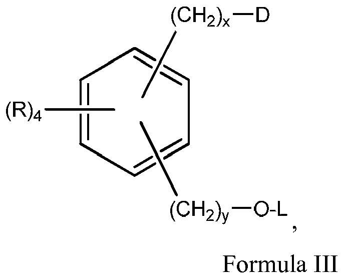 in which
- the R groups are identical to or different from one another, and each represent either:
- a hydrogen atom,
- an aliphatic, cycloaliphatic or aromatic alkyl radical, optionally comprising one or several heteroatoms (N, O, P, S, Si) or one or more halogen atoms,
- a halogen atom,
- a group based on one or more heteroatoms (N, O, P, S, Si);
- x and y are integers from 0 to 6 ;
- D is a group having a chemical function, one of the atoms of which has a non-bonding pair;
- L being an atom from column 1 of the Periodic Table.

2. Catalytic polymerization system according to Claim 1, **characterized in that** in Formula (II), Ln represents yttrium or gadolinium.

3. Catalytic polymerization system according to Claim 1 or 2, **characterized in that** in Formula (II), A is a ligand chosen from the family of amides.

4. Catalytic polymerization system according to any one of Claims 1 to 3, **characterized in that** in Formula (III), D is a group having a function chosen from alcohol, amine, ether, imine, phosphine, thioether and thiol functions.

5. Catalytic polymerization system according to Claim 4, **characterized in that** the compound of Formula (III) is chosen from those represented by Formula (IV): 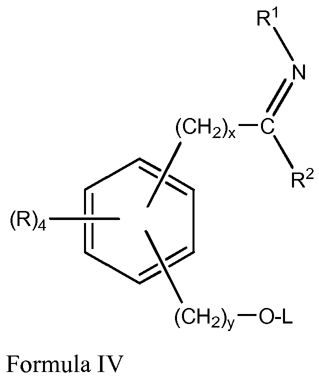 in which R, L, x and y are as defined in Claim 1 and R¹ and R², which are identical or different, are each a hydrogen atom or a C₁-C₂₀ aliphatic, C₅-C₂₀ cycloaliphatic or C₆-C₂₀ aromatic alkyl radical.

6. Catalytic polymerization system according to Claim 5, **characterized in that** the compound of Formula (IV) is chosen from phenoxyimines of Formula (V): 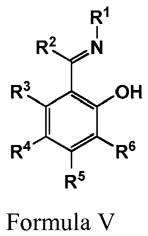 in which R¹ and R² are as defined in Claim 5 and R³ to R⁶ have the same definition as R defined in Claim 1.

7. Catalytic polymerization system according to Claim 6, **characterized in that** the phenoxyimine of Formula (V) is chosen from N-phenyl-3,5-di-*tert*-butylsalicylaldimine and N-(2,6-diisopropyl)phenyl-3,5-di-*tert*-butylsalicylaldimine.

8. Catalytic polymerization system according to any one of Claims 1 to 7, **characterized in that** it comprises a halogen donor compound.

9. Catalytic polymerization system according to any one of Claims 1 to 8, **characterized in that** it comprises a preforming conjugated diene.

10. Catalytic polymerization system according to any one of Claims 1 to 9, **characterized in that** the (compound based on an aromatic ring of Formula III/rare-earth metal) molar ratio has a value between 0 and 3 (limits excluded).

11. Catalytic polymerization system according to one of Claims 1 to 10, **characterized in that** the (alkylating agent/rare-earth metal) molar ratio has a value ranging from 2 to 40.

12. Process for preparing a catalytic system according to Claims 1 to 11, **characterized in that** said catalytic system is obtained by *in situ* reaction in an inert hydrocarbon-based solvent of the rare-earth complex, of the compound based on an aromatic ring of Formula (III) and of the alkylating agent, and also where appropriate of the halogen donor.

13. Process for preparing a catalytic system according to Claims 1 to 11, **characterized in that** said catalytic system is obtained by directly premixing, in an inert hydrocarbon based solvent, the rare-earth complex, the compound based on an aromatic ring of Formula (III) and the alkylating agent, and also where appropriate the halogen donor.

14. Process for preparing a catalytic system according to Claims 9 to 11, **characterized in that** said catalytic system is obtained by preforming, in an inert hydrocarbon-based solvent, the rare-earth complex, the compound based on an aromatic ring of Formula (III) and of the alkylating agent, and also where appropriate the halogen donor in the presence of the preforming conjugated diene.

15. Process for preparing a diene elastomer having a high content of *cis*-1,4 linkages comprising a continuous or batch reaction of a catalytic system in an inert hydrocarbon-based solvent with at least one conjugated diene monomer to be polymerized, **characterized in that** said catalytic system is as defined in any one of Claims 1 to 11.
